# EUROPÄISCHE PATENTSCHRIFT

(11) **EP 2 831 401 B1**
(45) Veröffentlichungstag und Bekanntmachung des Hinweises auf die Patenterteilung: **05.09.2018**
(21) Anmeldenummer: 13711614.1
(22) Anmeldetag: 18.03.2013
(51) Int. Cl.: F02G 5/02

(54) **VERFAHREN UND SYSTEM ZUR WÄRMEÜBERTRAGUNG FÜR EIN FAHRZEUG**
METHOD AND SYSTEM FOR TRANSMITTING HEAT FOR A VEHICLE
PROCÉDÉ ET SYSTÈME DE TRANSFERT THERMIQUE POUR UN VÉHICULE

(30) Priorität: 31.03.2012 DE 102012006632
(43) Veröffentlichungstag der Anmeldung: 04.02.2015
(73) Patentinhaber: Volkswagen Aktiengesellschaft, 38440 Wolfsburg (DE)
(72) Erfinder: KÄPPNER, Christoph, 38118 Braunschweig (DE); DRÜCKHAMMER, Jens, 38108 Braunschweig (DE)
(74) Vertreter: Bungartz, Florian
(86) Internationale Anmeldenummer: PCT/EP2013/055530
(87) Internationale Veröffentlichungsnummer: WO 2013/143897

(56) Entgegenhaltungen:
- EP-A1- 2 243 937
- EP-A1- 2 392 500
- EP-A2- 0 888 913
- EP-A2- 1 359 312
- EP-A2- 2 441 944
- EP-B1- 0 888 913
- EP-B1- 1 267 050
- WO-A2-2010/109145
- DE-A1- 3 245 026
- DE-A1-102010 022 962
- JP-A- 2011 240 735
- JP-A- 2012 122 374

## Beschreibung

Die vorliegende Erfindung betrifft ein Verfahren und ein System, um insbesondere Abwärme eines Fahrzeugs gezielt zur Erwärmung bestimmter Bereiche des Fahrzeugs einzusetzen.

Die DE 197 01 134 A1 beschreibt ein Wärme-Speicherelement, welches integriert in eine Innenraum-Belüftung angeordnet ist.

Die WO 95/16175 offenbart eine thermische Speichervorrichtung in einem Luftverteilungssystem eines Fahrzeugs. Dabei wird ein Phasenübergangsmaterial zur Speicherung der Wärme beschrieben.

Die EP 0 185 009 B1 offenbart eine Kapselwand mit einem Wärme speichernden Material als Wärmespeicher, um die gespeicherte Wärme an eine Brennkraftmaschine abzugeben.

Die JP 2011 240735 A offenbart eine Brennkraftmaschine mit einem Verbrennungsmotor, in dessen Abgasstrang ein Wärmetauscher integriert ist. Der Wärmetauscher wird dazu genutzt, ein Transfermedium zu verdampfen, das in einem oder mehreren Wärmenutzungsvorrichtungen wieder verflüssigt wird. Eine der Wärmenutzungsvorrichtungen ist eine Rankine-Kreisprozessvorrichtung, in der die in dem verdampften Transfermedium gespeicherte Wärmeenergie in mechanische Energie gewandelt wird. Bei den weiteren Wärmenutzungsvorrichtungen handelt es um einen Motorvorwärmer und um einen Getriebevorwärmer. Weiterhin ist ein Wärmespeicher vorhanden, der so in ein Transfermediumleitungssystem integriert ist, dass von diesem freigegebene Wärmeenergie ausschließlich in der Kreisprozessvorrichtung nutzbar ist.

EP3245026 offenbart (vgl. Abbildung 6) ein Verfahren zur Wärmeübertragung für ein Fahrzeug, wobei eine in einem Abgas des Fahrzeugs enthaltene Abwärme in einem Wärmespeicher des Fahrzeugs gespeichert wird, wobei eine in dem Wärmespeicher gespeicherte thermische Energie eine Wärmesenke geleitet wird, wobei als Transfermedium Öl eingesetzt wird.

Die EP 2 243 937 A1 beschreibt ein Verfahren zur Regulierung des Wärmehaushalts einer Brennkraftmaschine mit einem als Kühlmittelkreislauf vorgesehenen Fluidkreislauf, wobei der Brennkraftmaschine, einem Getriebeölwärmetauscher, einem Motorölwärmetauscher, einem Speicher für erwärmtes Fluid und/oder einem Abgaswärmetauscher Wärme entzogen und einem Fahrgastraumheizungswärmetauscher, der Brennkraftmaschine, dem Getriebeölwärmetauscher dem Motorölwärmetauscher dem Speicher und/oder dem Abgaswärmetauscher bedarfsweise Wärme zugeführt wird.

Auch bei modernen Fahrzeugen gehen im Mittel mehr als 70 % der im Kraftstoff vorhandenen Energie als Abwärme ungenutzt an die Umgebung verloren.

Daher stellt sich die vorliegende Erfindung die Aufgabe, diese nach dem Stand der Technik ungenutzte Energie sinnvoller zu verwenden.

Erfindungsgemäß wird diese Aufgabe durch ein Verfahren zur Wärmeübertragung für ein Fahrzeug nach Anspruch 1, durch ein System zur Wärmeübertragung für ein Fahrzeug nach Anspruch 7 und durch ein Fahrzeug nach Anspruch 12 gelöst. Die abhängigen Ansprüche definieren bevorzugte und vorteilhafte Ausführungsformen der vorliegenden Erfindung.

Im Rahmen der vorliegenden Erfindung wird ein Verfahren zur Wärmeübertragung für ein Fahrzeug bereitgestellt. Dabei wird eine in einem Abgas des Fahrzeugs vorhandene Abwärme in einem Wärmespeicher des Fahrzeugs gespeichert. Die in dem Wärmespeicher gespeicherte thermische Energie wird dann gezielt an eine oder mehrere Wärmesenken aus einer Gruppe von Wärmesenken geleitet. Dazu kann der Wärmespeicher mit der einen oder mit den mehreren Wärmesenken thermisch gekoppelt und entkoppelt werden. Im eingekoppelten Zustand (der Wärmespeicher ist mit der einen oder den mehreren Wärmesenken gekoppelt) kann eingestellt werden, wie viel Wärmemenge pro Zeiteinheit zu der jeweiligen Wärmesenke geleitet wird. Damit ist eine genaue Regelung der jeweils zur Verfügung gestellten Wärmeleistung individuell für jede Wärmesenke möglich.

Da die nach dem Stand der Technik teilweise ungenutzt an die Umgebung abgegebene Abwärme in dem Wärmespeicher gespeichert und anschließend an das Kühlwasser, das Getriebeöl, das Motoröl, das Getriebe, den Verbrennungsmotor, den Energiespeicher und/oder die Ladeluft des Verbrennungsmotors abgegeben wird, wird die Abwärme vorteilhafterweise sinnvoller eingesetzt, als dies nach dem Stand der Technik regelmäßig der Fall ist. Dabei ermöglicht die Erwärmung des Kühlwassers auch indirekt die rasche Erwärmung des Fahrgastraums, da dadurch z.B. der Luftmassenstrom zur Innenraumklimatisierung erwärmt wird. Die Vorwärmung der Ladeluft führt vorteilhafterweise zu einer Emissionsreduzierung im Vergleich zu einer kalten Ladeluft.

Das erfindungsgemäße Verfahren zur Wärmeübertragung umfasst somit folgende Varianten:
- Führen eines Wärmestroms von dem Wärmespeicher zu einer oder mehreren Wärmesenken.
- Führen eines Wärmestroms von einer Wärmequelle (z. B. Abgaswärmetauscher) zu dem Wärmespeicher.
- Führen eines Wärmestroms von einer oder mehreren Wärmequellen zu einer oder mehreren Wärmesenken.

Der vorbestimmte Wert der zu einer bestimmten Wärmesenke geführten Wärmemenge pro Zeiteinheit kann im Mittel 10 bis 30 kW (z.B. 20 kW) betragen, wobei in den ersten Sekunden (z.B. 10 Sekunden) nach Beginn des Wärmestroms auch eine maximale Leistung von 40 bis 50 kW möglich ist. Für einen maximalen Verbrauchseffekt kann eine Wärmespeicherentladung in weniger als 4 Minuten (z.B. in 3 Minuten) nach Motorstart bzw. nach Fahrtbeginn möglich sein. Für einen maximalen Komforteffekt wird ein möglichst konstanter Wärmestrom von 5 bis 7 kW über eine möglichst lange Zeit hinweg angestrebt. Dabei entspricht dieser konstante Wärmestrom insbesondere einer maximalen Leistung eines Wärmetauschers der Innenraumheizung des Fahrzeugs.

Die Einstellung, zu welcher Wärmesenke ein wie großer Wärmestrom pro Zeiteinheit geführt wird, wird vorzugsweise anhand von Versuchsergebnissen festgelegt. Ferner ist es möglich, diese Einstellung anhand eines Optimierungsverfahrens vorzunehmen. Dazu wird das thermische Verhalten des Fahrzeugs simuliert und anhand bestimmter (optional vom Fahrer gewichtbarer) Kriterien (geringster Kraftstoffverbrauch, größter Innenraumkomfort, usw.) die beste Strategie bestimmt, welche dann die Einstellung vorgibt. Dabei wird der gesamte Wärmestrom (zu allen Wärmesenken) anfangs (d.h. zu Beginn des Wärmestroms) in der Regel vom Wärmespeicher und im weiteren Verlauf insbesondere von einer Temperaturregelung der Wärmesenken (z.B. Kühlmittel, Kühlwasser, Getriebeöl) begrenzt.

Die Gruppe von Wärmesenken umfasst insbesondere folgende Elemente:
- das Kühlwasser des Fahrzeugs,
- das Getriebeöl eines Getriebes des Fahrzeugs,
- das Motoröl eines Verbrennungsmotors des Fahrzeugs,
- das Getriebe des Fahrzeugs,
- den Verbrennungsmotor des Fahrzeugs,
- einen Energiespeicher (beispielsweise eine Batterie) des Fahrzeugs,
- eine Brennstoffzelle des Fahrzeugs,
- einen oder mehrere Sitze des Fahrzeugs,
- einen Elektromotor insbesondere zum Antrieb des Fahrzeugs,
- ein Ladeluftkühler des Fahrzeugs,
- eine oder mehrere elektronische Komponenten des Fahrzeugs,
- eine Leistungselektronik des Fahrzeugs,
- die Ladeluft des Verbrennungsmotors, und
- eine Wärmesenke, welche die zugeführte Wärmemenge in eine andere Energieform (z.B. mechanische Energie, elektrische Energie) oder Kälte wandelt.

Als Wärmesenke, welche die zugeführte Wärme in eine andere Energieform wandelt, kann dabei beispielsweise eine Wärmekraftmaschine oder ein thermoelektrischer Generator eingesetzt werden. Darüber hinaus kann eine Wärmesenke (z.B. eine Sorptionskälteanlage) die ihr zugeführte Wärmemenge auch einsetzen, um Kälte zu erzeugen, um mit der erzeugten Kälte beispielsweise eine Klimatisierung oder Ladeluftkühlung zu realisieren.

Mit Hilfe des Wärmespeichers ist es möglich, die der jeweiligen Wärmesenke zugeführte Wärmeleistung zu glätten und zu stabilisieren, was insbesondere beim Einsatz einer Wärmekraftmaschine als Wärmesenke von Vorteil ist.

Um die thermische Energie von dem Wärmespeicher an die Wärmesenke(n) zu leiten, wird als ein Transfermedium ein Thermoöl eingesetzt werden, welches bis zu einer Temperatur von 200° C (vorzugsweise bis 250° C) chemisch stabil ist. Beispielsweise kann 99%iges oder vorzugsweise 100%iges Ethanol als Transfermedium bzw. Thermoöl eingesetzt werden.

Der Einsatz eines Transfermediums zur Wärmeübertragung vermeidet beispielsweise die zeitlich wechselnde oder gleichzeitige Durchströmung des Wärmespeichers mit Abgas und Kühlmittel. Darüber hinaus erlaubt das Transfermedium zusammen mit dem Wärmespeicher die Realisierung eines unabhängigen, auf hohem Temperaturniveau (z.B. 250° C) arbeitenden Zwischenkreislaufs. Durch den Einsatz eines auch bei hohen Temperaturen stabilen Thermoöls verflüchtigt sich das Thermoöl kaum, weshalb es vorteilhafterweise selten nachgefüllt werden muss.

Bei einer bevorzugten erfindungsgemäßen Ausführungsform wird der Wärmespeicher thermisch mit der oder den Wärmesenken gekoppelt, wobei diese thermische Kopplung in Abhängigkeit von
- einer Strecke, welche von dem Fahrzeug noch zurückzulegen ist und/oder
- einer Information über eine Umgebung des Fahrzeugs
erfolgt.

Durch diese Nutzung von vorausschauenden Strecken- und Umgebungsinformationen (z. B. zu erwartende Restfahrtdauer, unmittelbar voraus liegendes Lastprofil des Fahrzeugs, Temperatur der Umgebung, um den Heizbedarf im Innenraum zu bestimmen) kann vorteilhafterweise der Thermohaushalt optimal gesteuert werden.

Beispielsweise wird bei einer kurzen Restfahrtdauer (z.B. weniger als 3 km) dem Wärmespeicher weniger thermische Energie entzogen als bei einer längeren Restfahrtdauer. Bei einer Kurzfahrt (z. B. gesamte Fahrstrecke kleiner als 5 km) wird ein größerer Anteil der in dem Wärmespeicher gespeicherten thermischen Energie zu dem Verbrennungsmotor (Motoröl oder direkt an den Verbrennungsmotor) geleitet als beispielsweise an das Getriebe. Dagegen wird bei einer bevorstehenden Spitzenbelastung des Fahrzeugs (beispielsweise aufgrund einer Steigung der von dem Fahrzeug demnächst zu befahrenden Fahrroute) ein größerer Anteil der in dem Wärmespeicher gespeicherten thermischen Energie an das Getriebe als an den Verbrennungsmotor geleitet. Dabei wird bei den beiden letztgenannten Beispielen vorausgesetzt, dass sich weder der Verbrennungsmotor noch das Getriebe bereits auf Betriebstemperatur befinden.

Mit anderen Worten ermöglicht die thermische Kopplung in Abhängigkeit von der von dem Fahrzeug zu befahrenden Strecke und von der Information über die Umgebung, dass gezielt Bereiche des noch nicht auf Betriebstemperatur befindlichen Fahrzeugs erwärmt werden, so dass insbesondere der Komfort (der Insassen des Fahrzeugs), der Verschleiß und der Kraftstoffverbrauch optimiert werden.

Insbesondere umfasst der Wärmespeicher ein Phasenübergangsmaterial, um damit die thermische Energie zu speichern.

Das Phasenübergangsmaterial (insbesondere auf Lithiumsalzbasis) wird als Latentwärmespeicher verwendet, um mit Hilfe eines Phasenübergangs (insbesondere von fest zu flüssig) thermodynamische Energie zu speichern. Mit anderen Worten wird die Enthalpie der reversiblen thermodynamischen Zustandsänderung des Phasenübergangsmaterials zur Speicherung der entsprechenden thermodynamischen Energie eingesetzt. Eine Hochvakuum-Isolation des Wärmespeichers erlaubt dann auch eine verlustarme Speicherung der thermischen Energie über Nacht.

Im Rahmen der vorliegenden Erfindung wird auch ein System zur Wärmeübertragung für ein Fahrzeug bereitgestellt. Dabei umfasst das System einen Wärmespeicher, einen oder mehrere Wärmetauscher und ein oder mehrere Ventile. Mit dem oder den Wärmetauschern wird zum einen eine in dem Abgas des Fahrzeugs enthaltene Abwärme diesem Abgas entzogen und in dem Wärmespeicher gespeichert. Zum anderen kann der Wärmespeicher über einen oder mehrere der Wärmetauscher mit einer oder mit mehreren Wärmesenken thermisch gekoppelt und entkoppelt werden, wodurch die in dem Wärmespeicher gespeicherte thermische Energie an die Wärmesenke(n) geleitet wird. Mit Hilfe des oder der Ventile ist das System in der Lage, der jeweiligen Wärmesenke genau eine vorbestimmte Wärmemenge pro Zeiteinheit zuzuführen.

Die Vorteile des erfindungsgemäßen Systems entsprechen im Wesentlichen den Vorteilen des erfindungsgemäßen Verfahrens, welche vorab im Detail ausgeführt sind, so dass hier auf eine Wiederholung verzichtet wird.

Als Ventile werden dabei vorteilhafterweise Wegeventile eingesetzt, welche mindestens drei Anschlüsse aufweisen, um beispielsweise einen dem Ventil über einen ersten Anschluss bzw. Strömungspfad zugeführten Wärmestrom über einen zweiten oder dritten Anschluss bzw. Strömungspfad abzuleiten. Durch den Einsatz eines Wegeventils kann genau dosiert werden, welcher Anteil des dem Wegeventil zugeführten Fluidstroms über den zweiten Anschluss bzw. Strömungspfad abgeleitet wird, wobei der restliche Anteil über den dritten Anschluss bzw. Strömungspfad abgeleitet wird. Wenn der zweite Anschluss mit der Wärmesenke und der dritte Anschluss mit einem an der Wärmesenke vorbei geführten Umgehungspfad bzw. Bypass verbunden ist, kann mit dem Wegeventil die der Wärmesenke pro Zeiteinheit zugeführte Wärmemenge sehr genau dosiert werden.

Darüber hinaus umfasst das erfindungsgemäße System ein Leitungsnetz, in welchem das als Transfermedium genutzte Thermoöl strömt, um den Wärmespeicher mit der oder den Wärmesenken thermisch zu koppeln.

Wie vorab schon angedeutet ist, können Wärmesenken-Wärmetauscher eingesetzt werden, um mit Hilfe des Transfermediums die thermische Energie des Wärmespeichers an eine oder an mehrere Wärmesenken zu leiten.

Darüber hinaus kann das System ein oder mehrere Ventile umfassen und derart ausgestaltet sein, dass mit Hilfe des bzw. der Ventile die Durchflussmenge des Transfermediums pro Zeiteinheit von dem Wärmespeicher zu der oder den Wärmesenken entsprechend eingestellt wird.

Durch den Einsatz der Ventile kann demnach nicht nur entschieden werden, ob die thermische Energie aus dem Wärmespeicher zu einer bestimmten Wärmesenke geleitet wird, sondern es kann darüber hinaus die thermische Energiemenge pro Zeiteinheit eingestellt werden, welche gezielt an die bestimmte Wärmesenke abgegeben wird.

Gemäß einer erfindungsgemäßen Ausführungsform kann das Leitungsnetz des Systems für einen oder für mehrere des mindestens einen Wärmesenken-Wärmetauschers jeweils einen Umgehungspfad aufweisen, über welchen das Transfermedium an dem entsprechenden Wärmesenken-Wärmetauscher vorbeigeleitet werden kann. Mittels eines Ventils kann dann eine erste Menge des Transfermediums pro Zeiteinheit, welche durch den entsprechenden Wärmesenken-Wärmetauscher strömt, und eine zweite Menge pro Zeiteinheit, welche durch den entsprechenden Umgehungspfad strömt, eingestellt werden.

Wenn mit anderen Worten das Leitungsnetz nur einen Wärmesenken-Wärmetauscher umfasst, dann kann das Leitungsnetz gemäß der vorab beschriebenen erfindungsgemäßen Ausführungsform einen Umgehungspfad für diesen Wärmesenken-Wärmetauscher aufweisen, über welchen das Transfermedium gesteuert durch ein Ventil an dem Wärmesenken-Wärmetauscher vorbeigeleitet werden kann. Wenn dagegen das Leitungsnetz mehrere Wärmesenken-Wärmetauscher umfasst, kann beispielsweise auch nur einer dieser Wärmesenken-Wärmetauscher einen entsprechenden Umgehungspfad aufweisen. Es ist in diesem Fall allerdings auch möglich, dass nur bestimmte dieser mehreren Wärmesenken-Wärmetauscher oder dass auch alle dieser mehreren Wärmesenken-Wärmetauscher einen jeweils von einem Ventil gesteuerten Umgehungspfad aufweisen.

Die Realisierung von Umgehungspfaden ermöglicht vorteilhafterweise, dass das Leitungsnetz einen Kreislauf des Transfermediums realisiert, ohne dass dazu zwangsläufig jeder Wärmesenken-Wärmetauscher von dem Transfermedium durchströmt werden muss.

Darüber hinaus umfasst das System insbesondere einen Transfermedium-Ausgleichsbehälter, welcher mit dem Leitungsnetz gekoppelt ist. Dieser Transfermedium-Ausgleichsbehälter ist ausgestaltet, um einen Druck des Transfermediums im Leitungsnetz konstant zu halten.

Durch den Transfermedium-Ausgleichsbehälter kann der Druck des Transfermediums vorteilhafterweise in einem großen Temperaturbereich, z.B. -20 °C bis 250° C, konstant gehalten werden.

Schließlich wird im Rahmen der vorliegenden Erfindung ein Fahrzeug bereitgestellt, welches ein erfindungsgemäßes System umfasst.

Der Fahrer beeinflusst insbesondere die Aufteilung des Wärmestroms aus dem Wärmespeicher auf die verschiedenen Wärmesenken. Dabei kann zwischen den Kraftstoffverbrauch des Fahrzeugs reduzierenden Wärmesenken (z.B. Motoröl, Motorkühlmittel, Getriebeöl) und den Komfort für den Fahrer (und weiteren Insassen) des Fahrzeugs steigernden Wärmesenken (z.B. Motorkühlmittel, Sorptionskälteanlage (s.u.)) unterschieden werden. Durch eine (manuelle) Priorisierung (z.B. Bedienung eines Heizungs- und/oder Klimaanlagereglers) kann der Wärmestrom stufenlos auf die jeweiligen Wärmesenken aufgeteilt werden.

Die Aufteilung des Wärmestroms von dem Wärmespeicher auf die verschiedenen den Kraftstoffverbrauch des Fahrzeugs reduzierenden Wärmesenken erfolgt vorteilhafterweise abhängig von dem Motorbetriebspunkt, von der Umgebungstemperatur, von dem Ladezustand des Wärmespeichers, von der Temperatur bestimmter Medien (z.B. Transfermedium, Motoröl, Getriebeöl, Motorkühlmittel) sowie gegebenenfalls von der aktuell befahrenen Strecke und/oder von der noch zurückzulegenden Strecke. Die Entscheidung über die Aufteilung des Wärmestroms oder die Bestimmung, welche Wärmemenge pro Zeiteinheit welcher Wärmesenke zugeführt wird, kann dabei anhand eines vorapplizierten Zustandsautomaten, anhand von neuronalen Netzen, anhand von Kennfeldern oder anhand eines ständig aktualisierten Fahrzeugmodells, welches das thermische Verhalten des Fahrzeugs modelliert, in Kombination mit dem vorab beschriebenen Optimierungsverfahren getroffen bzw. durchgeführt werden.

Das erfindungsgemäße System umfasst die Möglichkeit, einen (vollständigen) Wärmetransfer aus dem Wärmespeicher in eine oder in mehrere Wärmesenken bereits vor dem Start des Verbrennungsmotors oder vor einem Fahrtantritt durchzuführen, wobei in diesem Fall bevorzugt ein Kühlmittel, insbesondere ein Motorkühlmittel, erwärmt wird. Für diesen Fall ist das erfindungsgemäße System insbesondere ausgestaltet, um einen Kühlmittel-Volumenstrom zwischen einem Transfermedium-Kühlmittel-Wärmeübertrager (z. B. Kühlwasser-Wärmetauscher) und dem Verbrennungsmotor auch dann zu realisieren, wenn der Verbrennungsmotor nicht läuft. Zu diesem Zweck kann beispielsweise eine elektrische Pumpe (z.B. Wasserpumpe) eingesetzt werden, um das Kühlmittel in dem Zweig des Kühlkreislaufs zwischen dem Transfermedium-Kühlmittel-Wärmeübertrager und dem Verbrennungsmotor zirkulieren zu lassen.

Der Wärmetransfer von dem Wärmespeicher in mindestens eine Wärmesenke vor dem Start des Verbrennungsmotors oder vor dem Fahrtantritt wird beispielsweise durchgeführt, wenn eine oder eine Kombination von folgenden Bedingungen vorliegt:
- Die Zündung des Fahrzeugs wird aktiviert.
- Die Zentralverriegelung des Fahrzeugs wird entriegelt.
- Die Fahrertür des Fahrzeugs wird geöffnet.
- Ein entsprechendes Signal von einer Fernbedienung des Fahrzeugs (ähnlich wie bei einer Standheizung des Fahrzeugs) wird von dem System empfangen.
- Eine entsprechende SMS wird über eine Kommunikationseinrichtung des Fahrzeugs von dem System empfangen.
- Über das Internet wird eine Startzeit für den Wärmetransfer vorgegeben, welche von dem erfindungsgemäßen System über eine Kommunikationseinrichtung des Fahrzeugs erfasst wird.
- Es wird dem System eine Startzeit für den Wärmetransfer beispielsweise über den Bordcomputer des Fahrzeugs vorgegeben.

Ein unerwünschtes Aktivieren des Wärmetransfers vor dem Start des Verbrennungsmotors oder vor dem Fahrtantritt und damit ein unerwünschtes oder verfrühtes Entladen des Wärmespeichers kann verhindert werden, indem bestimmte der oben genannten Bedingungen (insbesondere die Aktivierung der Zündung, die Entriegelung der Zentralverriegelung und die Öffnung der Fahrertür) nur dann zu einer Aktivierung des Wärmetransfers führen, wenn zusätzlich eine, mehrere oder alle der folgenden Vorbedingungen erfüllt sind:
- Die Zeitspanne, welche seit der letzten Deaktivierung des Verbrennungsmotors verstrichen ist, ist größer als eine vorbestimmte Zeitspanne (z. B. 1 h).
- Die aktuelle Motortemperatur ist kleiner als eine vorbestimmte Motortemperatur (z.B. 60 °C).
- Die aktuelle Innenraumtemperatur ist kleiner als eine vorbestimmte Innenraumtemperatur (z.B. 20 °C).
- Die Startzeit des Wärmetransfers entspricht bezüglich Wochentag und Uhrzeit einem von dem System erlernten Nutzungsprofil des Fahrers des Fahrzeugs.

Als ein unerwünschtes Aktivieren des Wärmetransfers oder als eine Fehl-Auslösung des Systems kann jede Aktivierung des Wärmetransfers angesehen werden, welche mehr als 30 Minuten vor dem tatsächlichen Fahrtbeginn bzw. Start des Verbrennungsmotors erfolgt. Die Berücksichtigung der vorab beschriebenen Vorbedingungen stellt beispielsweise vorteilhafterweise sicher, dass in einem Fall, in welchem 10 Minuten nach Abstellen des Verbrennungsmotors und Verriegelung des Fahrzeugs nochmals die Zentralverriegelung entriegelt und die Fahrertür geöffnet wird (da beispielsweise ein Mobiltelefon im Fahrzeug vergessen wurde), die erfindungsgemäße Aktivierung des Wärmetransfers nicht stattfindet. Das erfindungsgemäße System erkennt in diesem Fall, dass seit der Deaktivierung des Verbrennungsmotors eine zu kurze Zeitspanne verstrichen ist oder dass sich der Verbrennungsmotor noch auf seiner Betriebstemperatur befindet oder dass die vermeintliche Startzeit nicht mit dem gelernten Nutzungsprofil übereinstimmt, so dass der Wärmetransfer vorteilhafterweise nicht aktiviert wird.

Durch die vorliegende Erfindung wird vorteilhafterweise auch der Kraftstoffverbrauch des Fahrzeugs verringert, da ein Wärmemangel in der Kaltstartphase schon bei einer Starttemperatur von 20° C zu einem Mehrverbrauch von bis 15 % im NEFZ (Neuen Europäischen Fahrzyklus) führt. Diese Prozentangabe (15 %) ist dabei stark vom Fahrzeug, insbesondere dem Antriebsmotor des Fahrzeugs, vom tatsächlichen Fahrzyklus und weiteren Randbedingungen abhängig.

Die vorliegende Erfindung ist insbesondere für Kraftfahrzeuge geeignet. Selbstverständlich ist die vorliegende Erfindung jedoch nicht auf diesen bevorzugten Anwendungsbereich eingeschränkt, da die vorliegende Erfindung beispielsweise auch bei Schiffen, Flugzeugen sowie gleisgebundenen oder spurgeführten Fahrzeugen einsetzbar ist. Darüber hinaus ist die Erfindung selbst losgelöst von Fortbewegungsmitteln, beispielsweise auch für ortsfeste Systeme (z.B. einen Kran), geeignet.

Im Folgenden wird die vorliegende Erfindung anhand bevorzugter erfindungsgemäßer Ausführungsformen im Detail mit Bezug zu den Figuren erläutert.

In Fig. 1 ist ein erfindungsgemäßes System mit einem Abgas-Wärmetauscher und zwei Wärmesenken-Wärmetauschern und einem Umgehungspfad pro Wärmesenken-Wärmetauscher dargestellt.

In Fig. 2 ist eine weitere Variante eines erfindungsgemäßen Systems mit einem Abgas-Wärmetauscher und zwei Wärmesenken-Wärmetauschern und einem Umgehungspfad pro Wärmesenken-Wärmetauscher dargestellt.

In Fig. 3 ist ein erfindungsgemäßes Systems mit einem Abgas-Wärmetauscher und zwei Wärmesenken-Wärmetauschern dargestellt, wobei die zwei Wärmesenken-Wärmetauscher einen gemeinsamen Umgehungspfad besitzen.

Fig. 4 zeigt eine andere Variante eines erfindungsgemäßen Systems mit einem Abgas-Wärmetauscher und zwei Wärmesenken-Wärmetauschern und einem Umgehungspfad pro Wärmesenken-Wärmetauscher.

In Fig. 5 ist ein erfindungsgemäßes Fahrzeug mit einem erfindungsgemäßen System schematisch dargestellt.

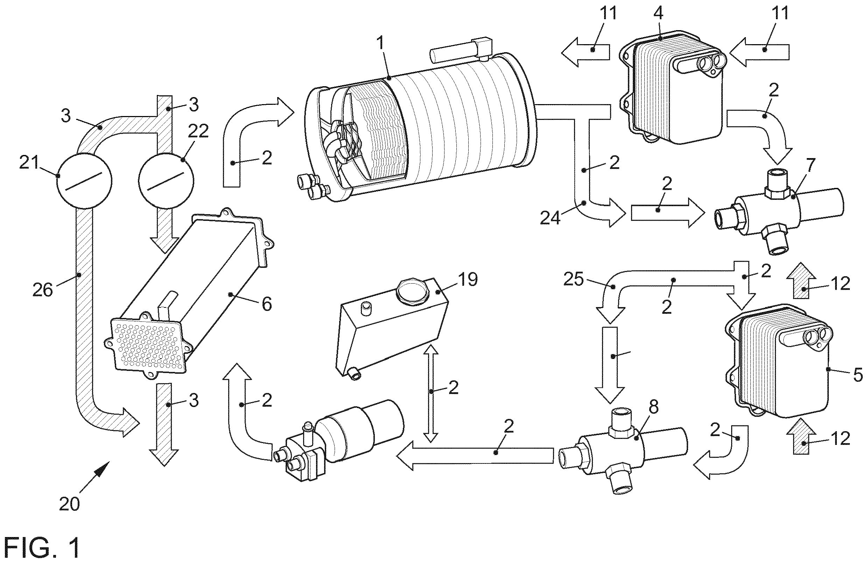

Fig. 1 zeigt ein erfindungsgemäßes System 20, welches neben einem Wärmespeicher 1 einen Abgas-Wärmetauscher 6, einen Kühlwasser-Wärmetauscher 4 und einen Getriebeöl-Wärmetauscher 5 umfasst. Die Wärmetauscher 4-6 sind über ein Leitungsnetz verbunden, in welchem ein Transfermedium bzw. Thermoöl 2 fließt. Man erkennt, dass das Thermoöl 2 im Kreis strömt, wobei in Strömungsrichtung nach dem Wärmespeicher 1, der Kühlwasser-Wärmetauscher 4, der Getriebeöl-Wärmetauscher 5 und der Abgas-Wärmetauscher 6 durchströmt wird.

Während der Abgas-Wärmetauscher 6 von dem Thermoöl 2 quasi zwangsläufig durchströmt wird, existiert jeweils ein Umgehungspfad 24, 25 für den Kühlwasser-Wärmetauscher 4 und den Getriebeöl-Wärmetauscher 5. Mit dem Ventil 7, welches in Strömungsrichtung hinter dem Kühlwasser-Wärmetauscher angeordnet ist, kann die Durchflussmenge des Thermoöls 2 pro Zeiteinheit durch den Kühlwasser-Wärmetauscher 4 im Verhältnis zu der Durchflussmenge des Thermoöls 2 pro Zeiteinheit, welches über den Umgehungspfad 24 geführt wird, gesteuert werden. In ähnlicher Weise kann mit dem Ventil 8, welches in Strömungsrichtung hinter dem Getriebeöl-Wärmetauscher 5 angeordnet ist, die Durchflussmenge des Thermoöls 2 pro Zeiteinheit durch den Getriebeöl-Wärmetauscher 5 im Verhältnis zu der Durchflussmenge des Thermoöls 2 pro Zeiteinheit, welches durch den Umgehungspfad 25 geleitet wird, gesteuert werden. Über einen Thermoöl-Ausgleichsbehälter 19 kann der Druck des Thermoöls im Leitungsnetz nahezu konstant gehalten werden. Dieser Ausgleichsbehälter 19 wird eingesetzt, da sich das Volumen des eingesetzten Thermoöls zwischen einer Temperatur von -20 °C und einer Temperatur von 250° um bis zu 25% ändert.

Mit Hilfe der Ventile 21 und 22 wird das vom Verbrennungsmotor des Fahrzeugs kommende Abgas 3 entweder durch den Abgas-Wärmetauscher 6 oder durch den Umgehungspfad 26 geleitet. Mit anderen Worten kann über die Ventile 21 und 22 gesteuert werden, welche Wärmemenge des Abgases 3 an das Thermoöl 2 übergeben wird. Durch den Kühlwasser-Wärmetauscher 4 strömt das Kühlwasser 11 des Verbrennungsmotors des Fahrzeugs, während durch den Getriebeöl-Wärmetauscher 5 das Getriebeöl 12 strömt. Mit Hilfe der Ventile 7 und 8 kann demnach gesteuert werden, welche Wärmeenergie von dem Wärmespeicher 1 an das Kühlwasser 11 und/oder an das Getriebeöl 12 abgegeben wird.

Bei einem Kaltstart des Fahrzeugs (d.h. weder der Verbrennungsmotor noch das Getriebe befinden sich auf Betriebstemperatur) werden die Ventile 7 und 8 derart geschaltet, dass das Thermoöl 2 sowohl durch den Kühlwasser-Wärmetauscher 4 als auch durch den Getriebeöl-Wärmetauscher 5 strömt, um dadurch eine von dem Wärmespeicher 1 bereitgestellte Wärmeenergie an das Kühlwasser 11 und das Getriebeöl 12 abzugeben. Dadurch wird sowohl der Verbrennungsmotor als auch das Getriebe des Fahrzeugs erwärmt, wodurch rascher (als nach dem Stand der Technik) die optimale Betriebstemperatur sowohl des Verbrennungsmotors als auch des Getriebes erreicht wird.

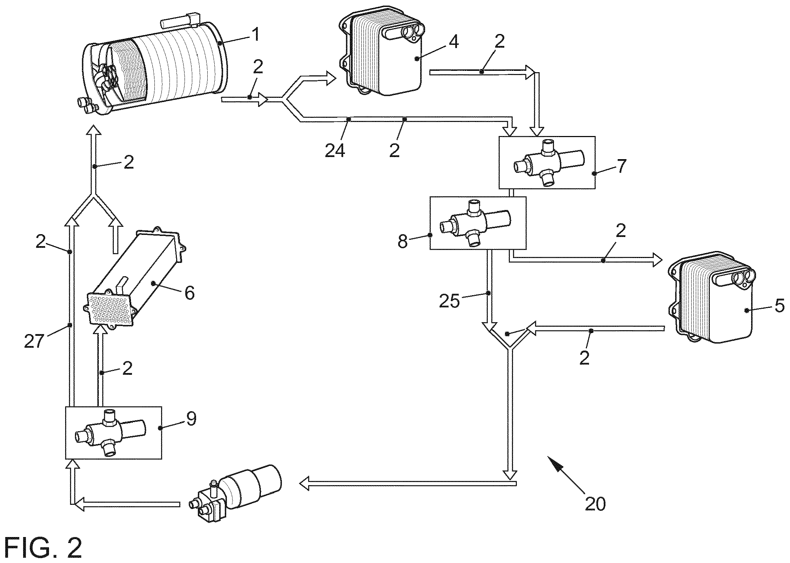

In Fig. 2 ist eine Variante des in Fig. 1 dargestellten erfindungsgemäßen Systems 20 abgebildet. Daher werden im Folgenden nur die Unterschiede zu dem in Fig. 1 dargestellten System 20 erläutert.

Bei dem in Fig. 2 dargestellten System 20 existiert auch ein Umgehungspfad 27 des Thermoöls 2 für den Abgas-Wärmetauscher 6, wobei über das Ventil 9 in Strömungsrichtung vor dem Abgas-Wärmetauscher 6 die Durchflussmenge des Thermoöls 2 pro Zeiteinheit durch den Umgehungspfad 27 im Verhältnis zu der Durchflussmenge des Thermoöls 2 pro Zeiteinheit durch den Abgas-Wärmetauscher 6 gesteuert wird. Im Gegensatz zu dem in Fig. 1 dargestellten System 20 sitzt das Ventil 8, mit welchem die Durchflussmenge des Thermoöls 2 durch den Umgehungspfad 25 im Verhältnis zu der Durchflussmenge des Thermoöls 2 durch den Getriebeöl-Wärmetauscher 5 eingestellt wird, in Strömungsrichtung vor dem Getriebeöl-Wärmetauscher 5. Dadurch kann anstelle der in Fig. 2 dargestellten zwei 3/2-Wege-Ventile 7 und 8 (3 Anschlüsse und 2 mögliche Wege) auch ein 4/4-Wege Ventil (4 Anschlüsse und 4 mögliche Wege) eingesetzt werden.

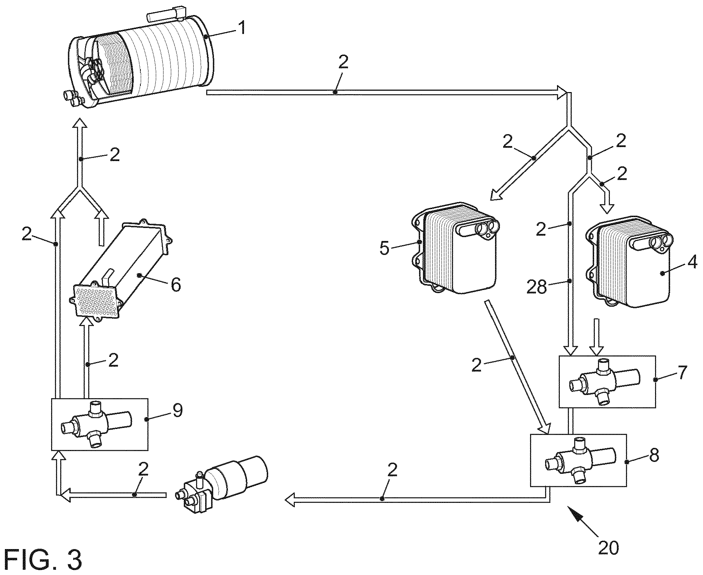

In Fig. 3 ist eine weitere Variante des in Figuren 1 und 2 dargestellten erfindungsgemäßen Systems 20 dargestellt. Im Folgenden werden die Unterschiede zu dem in Fig. 2 dargestellt System 20 herausgearbeitet.

Während bei dem in Fig. 2 dargestellten System 20 jeweils ein Umgehungspfad 24 bzw. 25 für den Kühlwasser-Wärmetauscher 4 bzw. Getriebeöl-Wärmetauscher 5 vorhanden ist, liegen bei dem in Fig. 3 dargestellten System der Strömungspfad durch den Kühlwasser-Wärmetauscher 4, der Strömungspfad durch den Getriebeöl-Wärmetauscher 5 und der Umgehungspfad 28 parallel. Dabei lässt sich über das Ventil 8 die Durchflussmenge pro Zeiteinheit durch den Getriebeöl-Wärmetauscher 5 im Verhältnis zu der Durchflussmenge pro Zeiteinheit, welche durch den Umgehungspfad 28 und/oder den Kühlwasser-Wärmetauscher 4 strömt, einstellen. Darüber hinaus lässt sich über das Ventil 7 die Durchflussmenge pro Zeiteinheit durch den Umgehungspfad 28 im Verhältnis zu der Durchflussmenge pro Zeiteinheit durch den Kühlwasser-Wärmetauscher 4 einstellen.

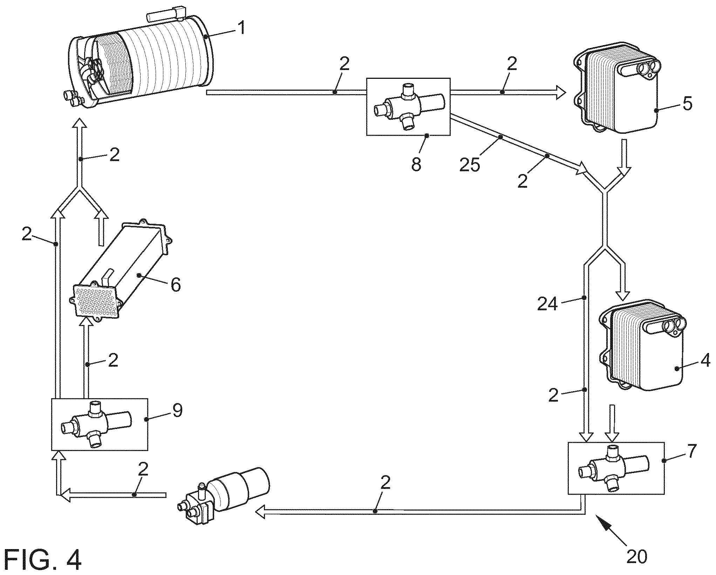

In Fig. 4 ist noch eine andere Variante des in Figuren 1 bis 3 dargestellten erfindungsgemäßen Systems 20 abgebildet. Im Folgenden werden die Unterschiede zu dem in Fig. 2 dargestellten System 20 aufgeführt.

Während bei dem in Fig. 2 dargestellten System 20 in Strömungsrichtung nach dem Wärmespeicher 1 zuerst der Kühlwasser-Wärmetauscher 4 und dann der Getriebeöl-Wärmetauscher 5 angeordnet sind, ist bei dem in Fig. 4 dargestellten System 20 in Strömungsrichtung nach dem Wärmespeicher 1 zuerst der Getriebeöl-Wärmetauscher 5 und erst dann der Kühlwasser-Wärmetauscher 4 angeordnet.

Die Ventile 7-9 sind insbesondere derart ausgestaltet, dass die Ventile 7-9 im stromlosen Fall (d.h. sie erhalten keine Steuerbefehle von einem Steuergerät) auf einen vorbestimmten Weg schalten. Dabei hat es sich als vorteilhaft erwiesen, wenn die Ventile 7-9 im stromlosen Fall jeweils das Thermoöl 2 durch den Umgehungspfad bzw. Bypass leiten.

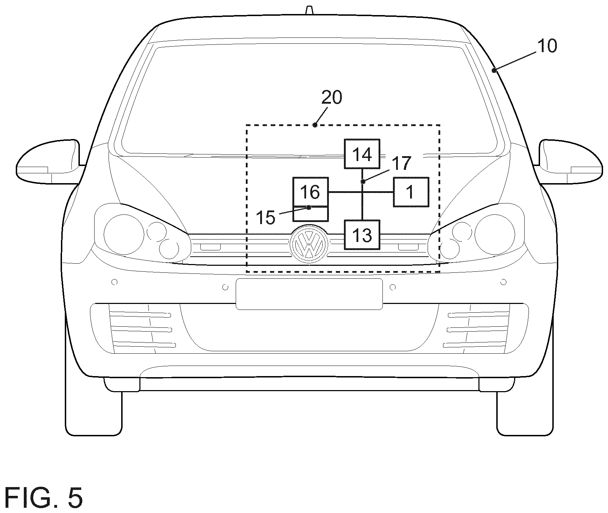

Schließlich ist in Fig. 5 ein erfindungsgemäßes Fahrzeug 10 dargestellt, welches ein erfindungsgemäßes System 20 umfasst. Dabei umfasst das schematisch dargestellte System 20 ein Leitungsnetz 17, über welches der Wärmespeicher 1 mit den Wärmesenken Batterie 13, Getriebe 14 und Verbrennungsmotors 16 des Fahrzeugs 10 thermisch gekoppelt und entkoppelt werden kann. In dem Verbrennungsmotor 16 befindet sich Motoröl 15.

### Bezugszeichenliste

- 1: Wärmespeicher
- 2: Thermoöl
- 3: Abgas
- 4: Kühlwasser-Wärmetauscher
- 5: Getriebeöl-Wärmetauscher
- 6: Abgas-Wärmetauscher
- 7: Ventil
- 8: Ventil
- 9: Ventil
- 10: Fahrzeug
- 11: Kühlwasser
- 12: Getriebeöl
- 13: Batterie
- 14: Getriebe
- 15: Motoröl
- 16: Verbrennungsmotor
- 17: Leitungsnetz
- 19: Thermoöl-Ausgleichsbehälter
- 20: System
- 21,22: Ventil
- 24-28: Bypass

## Patentansprüche

1. Verfahren zur Wärmeübertragung für ein Fahrzeug (10),
wobei eine in einem Abgas (3) des Fahrzeugs (10) enthaltene Abwärme in einem Wärmespeicher (1) des Fahrzeugs (10) gespeichert wird,
wobei eine in dem Wärmespeicher (1) gespeicherte thermische Energie an mindestens eine von mehreren Wärmesenken (11-16) geleitet wird,
wobei der Wärmespeicher (1) mit den mehreren Wärmesenken (11-16) thermisch koppelbar und entkoppelbar ist, und
wobei im gekoppelten Zustand eine Wärmemenge pro Zeiteinheit, welche zu der mindestens einen Wärmesenke (11-16) geleitet wird, auf einen vorbestimmten Wert eingestellt wird
**dadurch gekennzeichnet,**
**dass** als ein Transfermedium ein Thermoöl (2) eingesetzt wird, um den Wärmespeicher (1) mit den Wärmesenken (11-16) zu koppeln, und
**dass** das Thermoöl ausgestaltet ist, um bis zu einer Temperatur von 200° C chemisch stabil zu sein.

2. Verfahren nach Anspruch 1,
**dadurch gekennzeichnet,**
**dass** die in dem Wärmespeicher (1) gespeicherte thermische Energie an mindestens eine Wärmesenke (11-16) einer Gruppe von Wärmesenken (11-16) geleitet wird, und
**dass** die Gruppe ein Kühlwasser (11) des Fahrzeugs (10), ein Getriebeöl (12) eines Getriebes (14) des Fahrzeugs (10), ein Motoröl (15) eines Verbrennungsmotors (16) des Fahrzeugs (10), das Getriebe (14), den Verbrennungsmotor (16), einen Energiespeicher (13) des Fahrzeugs (10), eine Brennstoffzelle des Fahrzeugs (10), mindestens einen Sitz des Fahrzeugs (10), einen Elektromotor des Fahrzeugs (10), einen Ladeluftkühler des Fahrzeugs (10), mindestens eine elektronische Komponente des Fahrzeugs (10), eine Leistungselektronik des Fahrzeugs (10), eine Ladeluft des Verbrennungsmotors (16) und eine Wärmesenke, welche die zugeführte Wärmemenge in eine andere Energieform oder Kälte wandelt, umfasst.

3. Verfahren nach einem der vorherigen Ansprüche, **dadurch gekennzeichnet, dass** abhängig von einer Strecke, welche von dem Fahrzeug (10) noch bis zum Ende einer Fahrt zurückzulegen ist, und/oder abhängig von einer Information über eine Umgebung des Fahrzeugs (10) der Wärmespeicher (1) thermisch mit der mindestens einen Wärmesenke (11-16) gekoppelt wird.

4. Verfahren nach Anspruch 3,
**dadurch gekennzeichnet,**
**dass**, wenn eine Länge der Strecke kleiner als ein vorbestimmter Streckenschwellenwert ist und wenn die Temperatur eines Motoröls (15) unterhalb eines vorbestimmten Temperaturschwellenwerts liegt, ein erster Anteil der thermischen Energie, welcher an das Motoröl (15) oder einen Verbrennungsmotor (16) geleitet wird, höher eingestellt wird als ein zweiter Anteil der thermischen Energie, welcher an ein Getriebeöl (12) oder ein Getriebe (14) geleitet wird.

5. Verfahren nach Anspruch 3 oder 4,
**dadurch gekennzeichnet,**
**dass**, wenn eine abhängig von der Strecke von dem Verbrennungsmotor (16) zu erzeugende Leistung über einem vorbestimmten Leistungsschwellenwert liegt, ein erster Anteil der thermischen Energie, welcher an ein Motoröl (15) oder einen Verbrennungsmotor (16) geleitet wird, geringer eingestellt wird als ein zweiter Anteil der thermischen Energie, welcher an ein Getriebeöl (12) oder ein Getriebe (14) geleitet wird.

6. Verfahren nach einem der vorhergehenden Ansprüche, **dadurch gekennzeichnet, dass** der Wärmespeicher (1) ein Phasenübergangsmaterial umfasst.

7. System zur Wärmeübertragung für ein Fahrzeug (10),
wobei das System (20) einen Wärmespeicher (1), mindestens einen Wärmetauscher (6) und mindestens ein Ventil (7-9) umfasst,
wobei das System (20) ausgestaltet ist, um mittels des mindestens einen Wärmetauschers (6) eine in einem Abgas (3) des Fahrzeugs (10) enthaltene Abwärme in dem Wärmespeicher (1) zu speichern,
wobei das System (20) ausgestaltet ist, um den Wärmespeicher (1) mit mehreren Wärmesenken (11-16) thermisch zu koppeln und zu entkoppeln, um dadurch eine in dem Wärmespeicher (1) gespeicherte thermische Energie an mindestens eine der Wärmesenken (11-16) zu leiten,
wobei das System (20) ausgestaltet ist, um mittels des mindestens einen Ventils (7-9) eine Wärmemenge pro Zeiteinheit, welche zu den mehreren Wärmesenken (11-16) geleitet werden kann, auf einen vorbestimmten Wert einzustellen
und wobei das System (20) ein Leitungsnetz (17) umfasst, in welchem ein Transfermedium (2) strömt, um den Wärmespeicher (1) mit den Wärmesenken (11-16) thermisch zu koppeln,
**dadurch gekennzeichnet,**
**dass** das Transfermedium ein Thermoöl (2) ist, das bis zu einer Temperatur von 200° C chemisch stabil ist.

8. System nach Anspruch 7,
**dadurch gekennzeichnet,**
**dass** der mindestens eine Wärmetauscher mindestens einen Wärmesenken-Wärmetauscher (4, 5) umfasst, und
**dass** der mindestens eine Wärmesenken-Wärmetauscher (4, 5) ausgestaltet ist, um mittels des Transfermediums (2) die thermische Energie aus dem Wärmespeicher (1) an die mindestens eine Wärmesenke (11-16) abzugeben.

9. System nach Anspruch 8,
**dadurch gekennzeichnet,**
**dass** das Leitungsnetz (17) für einen oder mehrere des mindestens einen Wärmesenken-Wärmetauschers (4, 5) jeweils einen Umgehungspfad (24; 25) aufweist, durch welchen das Transfermedium (2) an dem entsprechenden Wärmesenken-Wärmetauscher (4; 5) vorbei leitbar ist, und
**dass** das System (20) ausgestaltet ist, um mittels des mindestens einen Ventils (7, 8) einen ersten Anteil des Transfermediums (2), welcher durch den jeweiligen Wärmesenken-Wärmetauscher (4; 5) strömt, und einen zweiten Anteil, welcher durch den jeweiligen Umgehungspfad (24; 25) strömt, einzustellen.

10. System nach einem der Ansprüche 7 bis 9,
**dadurch gekennzeichnet,**
**dass** das System (20) einen Transfermedium-Ausgleichsbehälter (19) umfasst, welcher mit dem Leitungsnetz (17) verbunden ist,
**dass** der Transfermedium-Ausgleichsbehälter (19) ausgestaltet ist, um einen Druck des Transfermediums im Leitungsnetz konstant zu halten.

11. System nach einem der Ansprüche 7 bis 11, **dadurch gekennzeichnet, dass** das System (20) zur Durchführung des Verfahrens nach einem der Ansprüche 1 bis 6 ausgestaltet ist.

12. Fahrzeug mit einem System (20) nach einem der Ansprüche 7 bis 11.

## Claims

1. Method for heat transfer for a vehicle (10),
wherein waste heat contained in an exhaust gas (3) of the vehicle (10) is stored in a heat store (1) of the vehicle (10),
wherein thermal energy stored in the heat store (1) is conducted to at least one of multiple heat sinks (11-16),
wherein the heat store (1) is thermally couplable to and decouplable from the multiple heat sinks (11-16), and
wherein, in the coupled state, a heat quantity that is conducted to the at least one heat sink (11-16) per unit of time is set to a predetermined value,
**characterized**
**in that**, as a transfer medium, a thermal oil (2) is used to couple the heat store (1) to the heat sinks (11-16), and
**in that** the thermal oil is designed to be chemically stable up to a temperature of 200°C.

2. Method according to Claim 1,
**characterized**
**in that** the thermal energy stored in the heat store (1) is conducted to at least one heat sink (11-16) of a group of heat sinks (11-16), and
**in that** the group comprises a cooling water (11) of the vehicle (10), a transmission oil (12) of a transmission (14) of the vehicle (10), an engine oil (15) of an internal combustion engine (16) of the vehicle (10), the transmission (14), the internal combustion engine (16), an energy store (13) of the vehicle (10), a fuel cell of the vehicle (10), at least one seat of the vehicle (10), an electric motor of the vehicle (10), a charge-air cooler of the vehicle (10), at least one electronic component of the vehicle (10), a set of power electronics of the vehicle (10), a charge air of the internal combustion engine (16), and a heat sink which converts the supplied heat quantity into another energy form or cold.

3. Method according to one of the preceding claims, **characterized in that** the heat store (1) is thermally coupled to the at least one heat sink (11-16) in a manner dependent on a distance that is still to be travelled by the vehicle (10) until the end of a journey and/or in a manner dependent on an information item relating to surroundings of the vehicle (10).

4. Method according to Claim 3,
**characterized**
**in that**, if a length of the distance is shorter than a predetermined distance threshold, and if the temperature of an engine oil (15) lies below a predetermined temperature threshold, a first fraction of the thermal energy, which is conducted to the engine oil (15) or to an internal combustion engine (16), is set to be higher than a second fraction of the thermal energy, which is conducted to a transmission oil (12) or a transmission (14).

5. Method according to Claim 3 or 4,
**characterized**
**in that**, if an amount of power to be generated by the internal combustion engine (16) in a manner dependent on the distance lies above a predetermined power threshold, a first fraction of the thermal energy, which is conducted to an engine oil (15) or to an internal combustion engine (16), is set to be lower than a second fraction of the thermal energy, which is conducted to a transmission oil (12) or a transmission (14).

6. Method according to one of the preceding claims, **characterized in that** the heat store (1) comprises a phase change material.

7. System for heat transfer for a vehicle (10),
wherein the system (20) comprises a heat store (1), at least one heat exchanger (6) and at least one valve (7-9),
wherein the system (20) is designed to use the at least one heat exchanger (6) to store waste heat contained in an exhaust gas (3) of the vehicle (10) in the heat store (1),
wherein the system (20) is designed to thermally couple and decouple the heat store (1) to and from multiple heat sinks (11-16) in order to thereby conduct thermal energy stored in the heat store (1) to at least one of the heat sinks (11-16), wherein the system (20) is designed to use the at least one valve (7-9) to set a heat quantity that can be conducted to the multiple heat sinks (11-16) per unit of time to a predetermined value,
and wherein the system (20) comprises a line network (17) in which a transfer medium (2) flows in order to thermally couple the heat store (1) to the heat sinks (11-16),
**characterized**
**in that** the transfer medium is a thermal oil (2) which is chemically stable up to a temperature of 200°C.

8. System according to Claim 7,
**characterized**
**in that** the at least one heat exchanger comprises at least one heat sink heat exchanger (4, 5), and in that the at least one heat sink heat exchanger (4, 5) is designed to use the transfer medium (2) to discharge the thermal energy from the heat store (1) to the at least one heat sink (11-16).

9. System according to Claim 8,
**characterized**
**in that** the line network (17) has, for one or more of the at least one heat sink heat exchanger (s) (4, 5), in each case one bypass path (24; 25) through which the transfer medium (2) can be conducted past the corresponding heat sink heat exchanger (4; 5), and
**in that** the system (20) is designed to use the at least one valve (7, 8) to set a first fraction of the transfer medium (2), which flows through the respective heat sink heat exchanger (4; 5), and a second fraction, which flows through the respective bypass path (24; 25).

10. System according to one of Claims 7 to 9, **characterized**
**in that** the system (20) comprises a transfer medium expansion tank (19) which is connected to the line network (17),
**in that** the transfer medium expansion tank (19) is designed to maintain a constant pressure of the transfer medium in the line network.

11. System according to one of Claims 7 to 11, **characterized in that** the system (20) is designed for carrying out the method according to one of Claims 1 to 6.

12. Vehicle having a system (20) according to one of Claims 7 to 11.

## Revendications

1. Procédé de transfert thermique pour un véhicule (10),
dans lequel une chaleur perdue contenue dans un gaz d'échappement (3) du véhicule (10) est stockée dans un accumulateur de chaleur (1) du véhicule (10),
dans lequel l'énergie thermique stockée dans l'accumulateur de chaleur (1) est transférée à au moins l'un parmi plusieurs puits de chaleur (11-16), l'accumulateur de chaleur (1) pouvant être accouplé à la pluralité de puits de chaleur (11-16) et être désaccouplé thermiquement de ceux-ci, et
dans lequel, dans l'état accouplé, une quantité de chaleur par unité de temps, qui est conduite à l'au moins un puits de chaleur (11, 16), étant ajustée à une valeur prédéterminée,
**caractérisé en ce que**
l'on utilise en tant que milieu de transfert une huile thermique (2) pour accoupler l'accumulateur de chaleur (1) au puits de chaleur (11-16), et
**en ce que** l'huile thermique est configurée pour être stable chimiquement jusqu'à une température de 200°C.

2. Procédé selon la revendication 1,
**caractérisé en ce que**
l'énergie thermique stockée dans l'accumulateur de chaleur (1) est conduite à au moins un puits de chaleur (11-16) d'un groupe de puits de chaleur (11-16) et **en ce que** le groupe comprend de l'eau de refroidissement (11) du véhicule (10), de l'huile de transmission (12) d'une transmission (14) du véhicule (10), une huile de moteur (15) d'un moteur à combustion interne (16) du véhicule (10), la transmission (14), le moteur à combustion interne (16), un accumulateur d'énergie (13) du véhicule (10), une pile à combustible du véhicule (10), au moins un siège de véhicule (10), un moteur électrique du véhicule (10), un refroidisseur d'air de suralimentation du véhicule (10), au moins un composant électronique du véhicule (10), une électronique de puissance du véhicule (10), de l'air de suralimentation du moteur à combustion interne (16) et un puits de chaleur qui convertit la quantité de chaleur acheminée en une autre forme d'énergie ou en froid.

3. Procédé selon l'une quelconque des revendications précédentes,
**caractérisé en ce qu'**en fonction d'une distance qui doit encore être parcourue par le véhicule (10) avant la fin d'un trajet, et/ou en fonction d'une information concernant l'environnement du véhicule (10), l'accumulateur de chaleur (1) est accouplé thermiquement à l'au moins un puits de chaleur (11-16).

4. Procédé selon la revendication 3,
**caractérisé en ce que**
lorsqu'une longueur de la distance est inférieure à une valeur seuil de distance prédéterminée, et que la température d'une huile de moteur (15) est en dessous d'une valeur seuil de température prédéterminée, une première proportion de l'énergie thermique qui est conduite à l'huile de moteur (15) ou à un moteur à combustion interne (16) est ajustée de manière à être supérieure à une deuxième proportion de l'énergie thermique qui est conduite à une huile de transmission (12) ou à une transmission (14).

5. Procédé selon la revendication 3 ou 4,
**caractérisé en ce que**
si une puissance à générer en fonction de la distance au moteur à combustion interne (16) est située au-dessus d'une valeur seuil de puissance prédéterminée, une première proportion de l'énergie thermique qui est conduite à une huile de moteur (15) ou à un moteur à combustion interne (16) est ajustée de manière à être inférieure à une deuxième proportion de l'énergie thermique qui est conduite à une huile de transmission (12) ou à une transmission (14).

6. Procédé selon l'une quelconque des revendications précédentes, **caractérisé en ce que** l'accumulateur de chaleur (1) comprend un matériau à transition de phase.

7. Système de transfert thermique pour un véhicule (10), le système (20) comprenant un accumulateur de chaleur (1), au moins un échangeur de chaleur (6) et au moins une soupape (7-9),
le système (20) étant configuré pour stocker, au moyen de l'au moins un échangeur de chaleur (6), une chaleur perdue contenue dans un gaz d'échappement (3) du véhicule (10) dans l'accumulateur de chaleur (1),
le système (20) étant configuré pour accoupler thermiquement l'accumulateur de chaleur (1) à plusieurs puits de chaleur (11-16) et pour le désaccoupler de ceux-ci, et pour conduire de ce fait une énergie thermique stockée dans l'accumulateur de chaleur (1) à au moins l'un des puits de chaleur (11-16),
le système (20) étant configuré pour ajuster à une valeur prédéterminée, au moyen de l'au moins une soupape (7-9), une quantité de chaleur par unité de temps qui peut être conduite à la pluralité de puits de chaleur (11-16),
et le système (20) comprenant un réseau de conduites (17) dans lequel s'écoule le milieu de transfert (2) afin d'accoupler thermiquement l'accumulateur de chaleur (1) aux puits de chaleur (11-16),
**caractérisé en ce que**
le milieu de transfert est une huile thermique (2) qui est stable chimiquement jusqu'à une température de 200°C.

8. Système selon la revendication 7,
**caractérisé en ce que**
l'au moins un échangeur de chaleur comprend au moins un échangeur de chaleur à puits de chaleur (4, 5), et
**en ce que** l'au moins un échangeur de chaleur à puits de chaleur (4, 5) est configuré pour diffuser, au moyen du milieu de transfert (2), l'énergie thermique provenant de l'accumulateur de chaleur (1) à l'au moins un puits de chaleur (11-16) .

9. Système selon la revendication 8,
**caractérisé en ce que**
le réseau de conduites (17) pour un ou plusieurs de l'au moins un échangeur de chaleur à puits de chaleur (4, 5) présente à chaque fois un chemin de contournement (24 ; 25) par le biais duquel le milieu de transfert (2) peut être conduit devant l'échangeur de chaleur à puits de chaleur correspondant (4 ; 5), et
**en ce que** le système (20) est configuré pour ajuster, au moyen de l'au moins une soupape (7, 8), une première proportion du milieu de transfert (2) qui s'écoule à travers l'échangeur de chaleur à puits de chaleur respectif (4 ; 5) et une deuxième proportion qui s'écoule à travers le chemin de contournement respectif (24 ; 25).

10. Système selon l'une quelconque des revendications 7 à 9,
**caractérisé en ce que**
le système (20) comprend un récipient d'équilibrage de milieu de transfert (19) qui est connecté au réseau de conduites (17),
**en ce que** le récipient d'équilibrage de milieu de transfert (19) est configuré pour maintenir constante dans le réseau de conduites une pression du milieu de transfert.

11. Système selon l'une quelconque des revendications 7 à 11, **caractérisé en ce que** le système (20) est configuré pour mettre en oeuvre le procédé selon l'une quelconque des revendications 1 à 6.

12. Véhicule comprenant un système (20) selon l'une quelconque des revendications 7 à 11.
